(19) Europäisches Patentamt
European Patent Office
Office européen des brevets

(11) **EP 4 577 750 B1**

(12) **EUROPÄISCHE PATENTSCHRIFT**

(45) Veröffentlichungstag und Bekanntmachung des Hinweises auf die Patenterteilung:
**06.05.2026  Patentblatt 2026/19**

(21) Anmeldenummer: **23765176.5**

(22) Anmeldetag: **23.08.2023**

(51) Internationale Patentklassifikation (IPC):
**F16B 33/02** *(2006.01)*    **F16B 25/00** *(2006.01)*

(52) Gemeinsame Patentklassifikation (CPC):
**F16B 33/02; F16B 25/0047**

(86) Internationale Anmeldenummer:
**PCT/EP2023/073185**

(87) Internationale Veröffentlichungsnummer:
**WO 2024/042143 (29.02.2024 Gazette 2024/09)**

(54) **SCHRAUBE FÜR DIE DIREKTVERSCHRAUBUNG IN EIN BAUTEIL**

SCREW FOR SCREWING DIRECTLY INTO A COMPONENT

VIS POUR LE VISSAGE DIRECT DANS UN COMPOSANT

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität:  **24.08.2022  DE 102022121435**

(43) Veröffentlichungstag der Anmeldung:
**02.07.2025  Patentblatt 2025/27**

(73) Patentinhaber: **EJOT SE & Co. KG**
**57319 Bad Berleburg (DE)**

(72) Erfinder:
• **ACHENBACH, Michael**
**35236 Breidenbach (DE)**
• **BIRKELBACH, Ralf**
**57334 Bad Laasphe (DE)**
• **GERBER, René**
**35112 Fronhausen (DE)**
• **HACKLER, Jan**
**57319 Bad Berleburg (DE)**

• **HELLMIG, Ralph J.**
**57334 Bad Laasphe (DE)**
• **RUNKEL, Dirk**
**57334 Bad Laasphe (DE)**
• **SCHLOSSER, Frank**
**35041 Marburg (DE)**
• **SELIMI, Ilir**
**57072 Siegen (DE)**
• **SINNER, Christoph**
**57334 Bad Laasphe (DE)**
• **WEIGEL, Gerd**
**35713 Eschenburg (DE)**

(74) Vertreter: **patcare Patentanwälte Partnerschaft mbB**
**Bajuwarenring 21**
**82041 Oberhaching (DE)**

(56) Entgegenhaltungen:
**CN-Y- 2 761 902        DE-U1- 202008 012 210**
**KR-B1- 102 383 042    US-A1- 2018 238 361**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine Schraube zur Direktverschraubung in ein Bauteil, insbesondere einem Bauteil aus einem Leichtmetallwerkstoff.

Die EP 1 053 405 B1 offenbart eine Schraube mit einem selbstfurchenden Gewinde, wobei die Schraube am vorderen Ende einen Furchabschnitt aufweist, der einen elliptischen Querschnitt aufweist und ein Gewindeprofil mit einer spitzen Gewindespitze besitzt.

Die WO 95/14863 A1 offenbart eine gewindefurchende Schraube mit Formelementen, die auf den Gewindegang aufgesetzt sind. Diese Schraube soll das grundsätzlich bei der Gewindeformung im Mutterwerkstoff mit zunehmender Einschraubtiefe zunehmende Einschraubmoment reduzieren.

Das Dokument KR 102 383 042 B1 zeigt eine weitere Schraube aus dem Stand der Technik.

Die vorgenannte Schraube weist im vorderen Bereich Formbereiche auf, die sich über ein im Wesentlichen von dem Schaft bis in die Spitze durchlaufendes Basisgewinde radial hinaus erstrecken und die in Umfangsrichtung begrenzt und relativ kurz sind. Diese Schraube offenbart eine Kalibriererhebung im Tragbereich, die nur sehr wenig über das Traggewinde hinausragt, insbesondere weniger als 0,08 mm.

Durch diese Schraube wird die Reibung beim Furchvorgang reduziert und dennoch eine gute Befestigungsleistung erreicht. Eine zuverlässige Herstellung einer solchen Kalibriererhebung, insbesondere mittels eines Walzverfahrens, ist schwierig, da das Material, das zur Ausformung der Kalibriererhebung benötigt wird, im Walzprozess nicht ausreichend zur Verfügung gestellt wird.

Es ist Aufgabe der Erfindung, die Befestigungsleistung der Schraube unter Beibehaltung eines geringen Furchmoments weiter zu verbessern.

Die Aufgabe wird durch die kennzeichnenden Merkmale des Anspruchs 1 in Verbindung mit seinen Oberbegriffsmerkmalen gelöst.

In bekannter Weise umfasst eine Schraube zur Direktverschraubung in ein Bauteil, insbesondere in ein Bauteil aus einem Leichtmetallwerkstoff, einen Kopf mit einem Antrieb und einen Schaft, wobei der Schaft mit einem Gewinde versehen ist. Der Gewindeaußenradius des Gewindes verringert sich ausgehend von einem zylindrischen Tragbereich über einen Spitzenbereich zur Schraubenspitze hin derart, dass das Gewinde am vom Kopf beabstandeten Ende einen geringeren Gewindeaußenradius aufweist als im Tragbereich. Der Spitzenbereich beginnt an der dem Tragbereich nächstgelegenen Position, an der der Gewindeaußenradius geringer als der Tragebereichsradius ist und erstreckt sich bis zu der Schraubenspitze.

Durch das Gewinde im Spitzenbereich wird ein Muttergewinde im Mutterwerkstoff des Bauteils erzeugt, in welches das Gewinde im Tragbereich eingeschraubt wird.

Das Gewinde weist eine der Schraubenspitze zugewandte Führungsflanke und eine dem Schraubenkopf zugewandte Lastflanke auf.

Die Führungsflanke und die Lastflanke sind über eine Gewindespitze verbunden, wobei die Profilkonturlinie, die sich aus dem Gewindequerschnitt ergibt, der Gewindespitze von der Führungsflanke bis zur Lastflanke einer Ellipsenbahn entlang einer die Gewindespitze definierenden Ellipse folgt. Am Übergang zwischen Gewindespitze und der jeweiligen Gewindeflanke liegt ein Übergangspunkt auf der die Gewindespitze definierenden Ellipse.

Erfindungsgemäß ist das Gewinde derart gestaltet, dass die Tangente an die Ellipse in dem Übergangspunkt im Übergang zur Lastflanke einen Lastflankenwinkel mit der großen Halbachse der Ellipse einschließt, der insbesondere höchstens 30° ist, und dass eine Tangente an die Ellipse in dem Übergangspunkt im Übergang zur Führungsflanke einen Führungsflankenwinkel mit der großen Halbachse der Ellipse einschließt, der insbesondere höchstens 30° ist.

Die Gewindespitze ist ferner derart gestaltet, dass eine Orthogonale auf die Tangente im Übergangspunkt die große Halbachse in einem Schnittpunkt schneidet.

Die Gewindespitze ist weiter erfindungsgemäß so gestaltet, dass der Abstand zwischen dem jeweiligen Übergangspunkt und dem jeweiligen Schnittpunkt kleiner ist als der Abstand des jeweiligen Schnittpunkts zum Scheitelpunkt der Gewindespitze. Bevorzugt entspricht der Abstand zwischen dem Übergangspunkt und dem Schnittpunkt weniger als 90% des Abstands des Schnittpunkts zum Scheitelpunkt der Gewindespitze.

So verläuft der Übergang von der elliptischen Gewindespitze in die Gewindeflanke insbesondere tangential. Der Übergang erfolgt damit fließend und das von der Gewindespitze verdrängte Material kann reibungsarm weiter an der Gewindeflanke entlang fließen, wodurch das Furchmoment reduziert werden kann. Die Gewindespitze ist ausreichend stumpf ausgebildet, dass so nur ein geringer Verschleiß eintritt. Auf diese Weise können die Verformungskräfte für den Furchvorgang und damit das Einschraubmoment reduziert werden.

Die Ellipse weist gemäß einer bevorzugten Ausgestaltung eine numerische Exzentrizität Epsilon zwischen 0,5 und 1 auf.

Durch die elliptische Gestaltung der Gewindespitze wird an der äußersten Gewindespitze eine robuste Formstruktur bereitgestellt, wodurch diese gute Furcheigenschaften besitzt. Zudem wird dem verdrängten Material im weiteren Verlauf von der äußersten Gewindespitze in Richtung des Gewindegrunds bis zur Flanke mit zunehmendem Abstand vom Scheitelpunkt immer weniger Widerstand entgegengebracht. Dadurch werden die zur Verformung des Mutterwerkstoffs notwendigen Radialkräfte reduziert, was ein leichteres Eindringen des Gewindes in den Mutterwerkstoff zur Folge hat.

Gemäß einer besonders bevorzugten Weiterbildung ist das Gewinde so gestaltet, dass sich die beiden Tangenten, die an den jeweiligen Übergangspunkten anliegen, schneiden und einen Schnittwinkel, nämlich einen Grundflankenwinkel von wenigstens 25° und von höchstens 60°, insbesondere weniger als 60°, insbesondere weniger als 45°, bilden.

So schließen die jeweiligen Tangenten einen Lastflankenwinkel und einen Führungsflankenwinkel mit der großen Halbachse ein. Die große Halbachse liegt parallel oder in einem Winkel von weniger als 25° zur Normalenebene der Schraubenmittelachse.

Die Führungsflanke und die Lastflanke entsprechen so dem Grundflankenwinkel. Der Grundflankenwinkel liegt bevorzugt zwischen 25° und 45°. Dies erlaubt ein verbessertes Einschraubverhalten, insbesondere in hochfeste Leichtmetallwerkstoffe.

Der Abstand des Übergangspunkts an der Führungsflanke von der großen Halbachse ist größer als 1/3 * tan (Führungsflankenwinkel) * Gewindehöhe. Der Abstand des Übergangspunkts an der Lastflanke von der großen Halbachse ist größer als 1/3 * tan (Lastflankenwinkel) * Gewindehöhe.

Die Gewindehöhe ist die Differenz von Gewindeaußenradius und halbem Kerndurchmesser. Mit dieser Gestaltung wird eine relativ schmale Ausbildung der Gewindeflanken erreicht.

Weiter bevorzugt kann die Gewindespitze so weitergebildet sein, dass die Verbindungslinie von dem jeweiligen Übergangspunkt mit dem Scheitelpunkt der großen Halbachse an der Gewindespitze einen Scheitelpunktswinkel mit der großen Halbachse einschließt, der kleiner als 55° ist.

Dies sorgt für einen entsprechend schlanken Verlauf der Gewindespitze, so dass ein verbessertes Eindringverhalten in den Mutterwerkstoff erreicht werden kann.

Bevorzugt kann die Gewindespitze von ihrer Ellipse in einen geradlinigen Abschnitt der Führungsflanke und / oder Lastflanke übergehen, wobei dieser insbesondere deckungsgleich mit der Tangente ist.

In einer Weiterbildung der Erfindung kann die Führungsflanke und / oder die Lastflanke entlang einer Ellipsenbahn verlaufen, deren Krümmung entgegen der Krümmung der Ellipse an der Gewindespitze ausgebildet ist. Die Krümmung kann dabei unmittelbar an die Gewindespitze oder an einen geradlinigen Abschnitt der Führungsflanke und / oder Lastflanke anschließen.

Die Exzentrizität der Ellipsenbahn der Führungsflanke und / oder Lastflanke ist bevorzugt geringer als die Exzentrizität der die Gewindespitze definierenden Ellipse. Dadurch ergibt sich eine deutliche Verbreiterung des Gewindes in Richtung des Gewindefußes, wodurch die Scherfestigkeit und Stabilität des Gewindes erhöht werden.

Gemäß einer weiteren vorteilhaften Weiterbildung der Erfindung ist die große Halbachse der die Gewindespitze definierenden Ellipse gegenüber der Normalebene zur Schraubenmittelachse um einen Winkel von bis zu 10° in Richtung der Führungs-Flanke geneigt.

Insbesondere beträgt der Abstand benachbarter Gewindeflanken bei 90 % ihrer Gewindehöhe mehr als das 0,7-fache der Steigung. Ferner kann die Flankenbreite bei 90 % ihrer Gewindehöhe weniger als das 0,5-fache der Gewindehöhe betragen. Auf diese Weise wird eine ausreichend kleine Gewindespitzenbreite bereitgestellt.

Gemäß einer bevorzugten Weiterbildung der Erfindung weist das Gewinde im Spitzenbereich wenigstens fünf sich in Radialrichtung erstreckende Erhebungen auf. Die Erhebungen sind in Umfangsrichtung begrenzt. Dies bedeutet, dass zwischen den Erhebungen ein lokales Minimum liegt.

Weiter bevorzugt sind die Erhebungen des Gewindes über die Schraubenspitze im Querschnitt so gestaltet, dass diese eine elliptische Form an der Gewindespitze aufweisen. So sind auch im Bereich der Erhebung die Führungsflanke und die Lastflanke über eine Gewindespitze verbunden, deren Konturlinie im Querschnitt einer Ellipse folgt.

Zusätzlich zu den Gewindespitzen des Gewindes im Tragbereich können auch die Erhebungen eine elliptische Form aufweisen. Durch die Anpassung an die Form des Gewindes im Tragbereich kann eine verbesserte Anlage des Basisgewindes an das gefurchte Muttergewinde erreicht werden, wobei auch die im Wesentlichen zum Furchen des Gewindes beitragenden Erhebungen verbesserte Furcheigenschaften erzielen.

Der Gewindeaußenradius folgt entlang der Schraubenlinie bereichsweise einem Basisgewindeverlauf. Der Basisgewindeverlauf wird über die lokalen Minima des Gewindeaußenradius, die zwischen den Erhebungen liegen, über den Spitzenbereich interpoliert. Das Gewinde wird in dem Bereich, in dem es mit dem interpolierten Basisgewindeverlauf übereinstimmt, als Basisgewinde bezeichnet, das einen ausgehend von der Schraubenspitze bis zum Tragbereichsradius ansteigenden Basisgewindeaußenradius aufweist.

Das Basisgewinde verläuft sozusagen so, wie das Gewinde ohne Erhebungen verlaufen würde. Der Basisgewindeaußenradius nimmt bevorzugt über den Spitzenbereich streng monoton, insbesondere linear, ab und entspricht im Tragbereich dem Tragbereichsradius.

Der Basisgewindeaußenradius im Tragbereich ergibt sich aufgrund des Hüllaußendurchmessers der zylindrischen Hüllkurve im Tragbereich. Der Tragbereichsradius ist über den gesamten Bereich, mit dem das Gewinde des Tragbereichs in das durch die Erhebungen im Spitzenbereich vorgefurchte Gewinde eingreift, konstant. Auf diese Weise sind erfindungsgemäß im zylindrischen Teil des Außengewindes keine Erhebungen vorgesehen, da diese aufgrund ihrer unzuverlässigen Herstellbarkeit in diesem Bereich das Einschraubverhalten negativ beeinflussen können.

Im Bereich der Erhebungen weist das Gewinde einen sich gegenüber dem Basisgewindeaußenradius ändernden Gewindeaußenradius auf, der entsprechend gegenüber dem Basisgewindeaußenradius vergrößert ist. Jede Erhebung weist so in Umfangsrichtung entlang der Schraubenlinie einen maximalen Gewindeaußenradius auf, der einem einer Erhebung zugeordneten Erhebungsmaximalradius entspricht. Dies sorgt für einen Anstieg und Abfall des Gewindeaußenradius über die Erhebung entlang der Schraubenlinie.

Erfindungsgemäß sind wenigstens zwei Erhebungen als Kalibriererhebungen ausgebildet, bei welchen der Erhebungsmaximalradius der Kalibriererhebungen gleich groß ist und gleichzeitig auch größer als der Tragbereichsradius ist. Der Erhebungsmaximalradius der Kalibriererhebungen definiert den Kalibrierradius.

Durch die wenigstens zwei Kalibriererhebungen wird ermöglicht, dass zunächst nur die der Schraubenspitze nächstliegende Kalibriererhebung eine Furchleistung erbringt. Die wenigstens eine, weiter beabstandete, Kalibriererhebung erbringt so lange keine oder nur eine deutlich reduzierte Furchleistung, bis die näher in Richtung der Schraubenspitze liegende Kalibriererhebung abgenutzt ist. Die in Richtung des Tragbereichs nachfolgende Kalibriererhebung übernimmt dann die Furchfunktion in dem Maß der Abnutzung der näher in Richtung der Schraubenspitze liegenden Kalibriererhebung. So wird ermöglicht, dass auch über einen längeren Einschraubweg und damit einhergehender größerer Furchleistung das Traggewinde in einen im Bauteil vorgeformten Gewindegang eingreifen kann, der möglichst definiert vorgeformt ist. Dies hat ein reduziertes Einschraubmoment zur Folge.

Zudem wird durch die erfindungsgemäße Schraube das Einschraubmoment gering und in engen Grenzen gehalten, da von den Kalibriererhebungen nur dann eine zusätzliche Furchleistung erbracht wird, wenn die wenigstens eine näher an der Schraubenspitze liegende Kalibriererhebung abgenutzt ist.

Dadurch, dass die Kalibriererhebungen im Bereich des abnehmenden Basisgewindeaußenradius liegen, ergibt sich eine größere Differenz zum Basisgewindeaußenradius als zum Tragbereichsradius.

Auch bei einem sehr geringen Unterschied zwischen Kalibrierradius, dem Erhebungsmaximalradius der Kalibriererhebungen, und dem Tragbereichsradius können so die Kalibriererhebungen zuverlässiger hergestellt werden, da auf diese Weise das Material für die Ausformung der Kalibriererhebungen zur Verfügung gestellt wird. Dieser Unterschied zwischen dem Erhebungsmaximalradius der Kalibriererhebungen, also dem Kalibrierradius, und dem Tragbereichsradius ist bevorzugt sehr gering und liegt insbesondere bei weniger als 0,1 mm.

Bevorzugt können wenigstens drei Kalibriererhebungen mit gleichem Erhebungsmaximalradius vorgesehen sein. So gibt es eine der Schraubenspitze nächstliegende Kalibriererhebung, die noch eine geringe Furchleistung erbringt und zwei weitere Kalibriererhebungen, die weiter von der Schraubenspitze entfernt angeordnet sind. Nach Abnutzung der jeweils der Schraubenspitze nächstliegenden Kalibriererhebung kann durch die weiter beabstandeten Kalibriererhebungen eine präzise Ausformung des Gewindegangs im Bauteil ermöglicht werden. Diese Gestaltung wird umso vorteilhafter, je härter der Bauteilwerkstoff und damit der Mutterwerkstoff ist.

Zudem sind zwischen den Kalibriererhebungen und der vordersten Schraubenspitze wenigstens drei Vorformerhebungen angeordnet, deren jeweiliger Erhebungsmaximalradius kleiner ist als der Erhebungsmaximalradius der Kalibriererhebungen, der Kalibrierradius. Zudem nimmt der Erhebungsmaximalradius der jeweiligen Vorformerhebungen in Richtung der Schraubenspitze ab. Dadurch kann der Mutterwerkstoff fortschreitend ausgeformt werden. Die Differenz im Erhebungsmaximalradius von aufeinanderfolgenden Erhebungen ist dabei bevorzugt so gewählt, dass jede Vorformerhebung in etwa dieselbe Furchleistung erbringen muss.

Gemäß einer bevorzugten Ausgestaltung nimmt der Basisgewindeaußenradius, ausgehend von der Schraubenspitze, über den Spitzenbereich in gleicher Weise zu, wie die Erhebungsmaximalradien der Vorformerhebungen zunehmen. Der interpolierte Verlauf des Erhebungsmaximalradius ist insbesondere parallel zum interpolierten Verlauf der lokalen Minima.

Bevorzugt liegt zwischen dem Tragbereichsradius und dem ersten Erhebungsmaximalradius in Richtung der Schraubenspitze ein lokales Minimum im Gewindeaußenradius vor, an dem der Gewindeaußenradius geringer als der Tragbereichsradius ist. Dies bedeutet, dass die Erhebung auch in Richtung des Kopfes vor dem Tragbereich auf das Niveau des Basisgewindes abfällt, das dort im Gewindeaußendurchmesser geringer als der Tragbereichsradius ist. Dadurch liegt die erste Erhebung ausgehend vom Tragbereich in Richtung der Schraubenspitze vollständig im Spitzenbereich.

Das Verhältnis von Gewindeaußenradius an diesem ersten lokalen Minimum zum Tragbereichsradius ist bevorzugt kleiner als 0,996. Dadurch wird eine ausreichend großer Unterschied im Außengewinderadius erreicht, so dass ausreichend Material zur Ausformung der Erhebung zur Verfügung steht.

Gemäß einer weiteren vorteilhaften Ausgestaltung ist das Gewinde derart gestaltet, dass ein Verhältnis des prozentualen Überstands von Kalibrierradius zu einem Minimums-Mittelwert zum prozentualen Überstand des Kalibrierradius zum Tragbereichsradius größer als 1,4 ist.

Der Minimums-Mittelwert ist der Mittelwert des Gewindeaußenradius am ersten lokalen Minimum und des Gewindeaußenradius am zweiten lokalen Minimum. Das erste lokale Minimum liegt zwischen dem Tragbereich und der ersten in Richtung der Spitze dem Tragbereich nächstliegenden Erhebung, das zweite lokale Minimum liegt zwischen dieser ersten Erhebung und der in Richtung der Spitze nächstliegenden Erhebung.

Alternativ zu einer linearen Zunahme des Erhebungsmaximalradiusverlaufs kann der Verlauf der Zunahme der Erhebungsmaximalradien in Richtung des Kopfes auch degressiv sein. Dadurch kann eine Anpassung an das Furchverhalten und an die Härte des Bauteilwerkstoffs erfolgen.

Die lokalen Minima zwischen den Erhebungen können dem Basisgewindeaußenradius entsprechen und über einen sich wenigstens teilweise über den Spitzenbereich erstreckenden Furchbereich kontinuierlich, insbesondere linear, in Richtung der Schraubenspitze abnehmen.

Entsprechen die lokalen Minima des Gewindeaußenradius zwischen den Erhebungen dem Basisgewindeaußenradius, führt dies zu einer vereinfachten Herstellung der Schraube und zu verbesserten Auszugskräften, da auch die Gewinde im gewindeformenden Spitzenbereich schon zur Auszugsfestigkeit beitragen können.

Das Gewinde ist in Radialrichtung durch eine Gewindespitze begrenzt. Wie üblich, erstreckt sich das Gewinde mit seiner Gewindespitze entlang der Gewindehelix, wobei die Lage der Punkte an der Gewindespitze, an welchen der Gewindeaußenradius bestimmt wird, sich in der Normalen-Ebene (Grundriss) in ihrem Winkel verändert, dieser Winkel wird als Umlaufwinkel bezeichnet.

Der Umlaufwinkel ist also der Winkel, den der Gewindeaußenradius, der eine Orthogonale zur Schraubenachse auf die Gewindehelix darstellt, mit einer am freien Schraubenende definierten Start-Orthogonalen, insbesondere am Gewindebeginn, einschließt. Ausgehend von der Start-Orthogonalen am Beginn des Gewindes erhöht sich der Umlaufwinkel mit jeder vollen Umdrehung um 360°.

Gemäß einer bevorzugten Ausgestaltung einer Erhebung kann an einer ersten Umlaufwinkelposition des Erhebungsumlaufwinkels der Gewindeaußenradius dem Basisgewindeaußenradius entsprechen. Bei zunehmender Erhöhung des Umlaufwinkel entspricht der Gewindeaußenradius dann in einer Umlaufwinkelposition am Maximum der Erhebung dem Erhebungsmaximalradius. Bei weiter zunehmendem Umlaufwinkel, an einer Umlaufwinkelposition am Ende der Erhebung, entspricht der Gewindeaußenradius dem Basisgewindeaußenradius. Dadurch ergibt sich ein Anstieg und Abfall des Gewindeaußenradius auf den Basisgewindeaußenradius. So kann eine verbesserte Tragfähigkeit schon in dem Bereich hergestellt werden, in dem der Basisgewindeaußenradius noch zunimmt.

Gemäß einer bevorzugten Weiterbildung einer Erhebung nimmt der Gewindeaußenradius ausgehend vom Basisgewindeaußenradius über einen Erhebungsumlaufwinkel monoton zu und dann bis zum Basisgewindeaußenradius monoton wieder ab. Dies erlaubt eine einfache Herstellung und definierte Furcheigenschaften der Erhebung. Insbesondere verläuft die Zu- und Abnahme entlang einer Parabel, deren Scheitelpunkt am Erhebungsmaximalradius liegt.

Der Basisgewindeaußenradius nimmt bevorzugt zwischen zwei entlang der Schraubenlinie parabolisch verlaufenden Erhebungen in Richtung des Kopfes linear zu.

Gemäß einer weiteren vorteilhaften Weiterbildung der Erfindung ist der Erhebungsmaximalradius einer Vorformerhebung größer als der nächstgelegene Gewindeaußenradius am Beginn der in Richtung des Schraubenkopfes nächstgelegenen Erhebung. Am Beginn einer Erhebung kann der Verlauf der Zunahme des Gewindeaußenradius eine größere Steigung aufweisen als der Verlauf des Basisgewindes. Durch diese Anordnung der Erhebungen wird sichergestellt, dass alle Vorformerhebungen nur über einen Teilbereich eine Furchleistung erbringen müssen, was das Furchmoment und die Abnutzung der Erhebungen reduziert.

Gemäß einer weiteren vorteilhaften Weiterbildung der Erfindung entspricht der Erhebungsumlaufwinkel, in der Normalen-Ebene zur Schraubenmittelachse, zwischen zwei benachbarten Erhebungsmaximalradien einem Winkelabstand alpha, mit 360° / n -10° < alpha < 360° /n +10°, wobei n zwischen 2, 3 oder 4, und der Winkelabstand einer Erhebung kleiner als 210°/ n ist. Dadurch wird eine über den Erhebungsumlaufwinkel relativ kurze Erhebung definiert, was die Reibung im Bereich des Erhebungsmaximalradius reduziert. Dadurch kann das Einschraubmoment reduziert werden.

Die Erhebungen können sich nicht nur in Richtung des Gewindeaußenradius nach außen erstrecken, sondern auch eine Ausdehnung in Längsrichtung der Schraube aufweisen, die größer als eine Ausdehnung des Basisgewindes in Längsrichtung der Schraube ist. Dies kann insbesondere beidseitig der Fall sein.

Dadurch kann das Muttergewinde durch die Vorformerhebungen bereits auch in seiner Breite fortschreitend vergrößert werden.

Insbesondere beträgt die Länge des Gewindes über den Spitzenbereich weniger als fünf Windungen. So kann, insbesondere bei einer Verschraubung in ein Sackloch, ein möglichst großer Teil der Schraubenlänge zur Tragfunktion beitragen.

Gemäß einer weiteren vorteilhaften Weiterbildung nimmt der Kerndurchmesser ausgehend von der Spitze über den Spitzenbereich zu, bis er dem Kerndurchmesser im Tragbereich entspricht. Auf diese Weise kann die Herstellbarkeit der erfindungsgemäßen Schraube verbessert werden.

Die relative Zunahme des Kerndurchmessers kann geringer als die Zunahme des Basisgewinderadius sein.

Die Steigung der Gewindelinie kann vorzugsweise etwa 5°-7° betragen, was der Zunahme des Basisgewindeaußenradius pro Windung um 3% bis 5% entspricht. Durch die sanfte Zunahme kann insbesondere bei proportionaler Zunahme des Erhebungsmaximalradius eine allmähliche Einformung des Muttergewindes in den Mutterwerkstoff erfolgen.

Die Schraube ist bevorzugt aus Stahl hergestellt.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Zeichnung bedeutet: ;

Fig. 1    eine perspektivische Ansicht eines vorderen Endes einer erfindungsgemäßen Schraube;

Fig. 2a    eine Seitenansicht der Schraube im Tragbereich und Spitzenbereich;

Fig. 2b    eine perspektivische Ansicht;

Fig. 2c    eine Draufsicht auf die Spitze;

Fig. 3a    eine Darstellung der Gewindelinie und des (interpolierten) Kerndurchmessers;

Fig. 3b    eine ausschnittsweise vergrößerte Darstellung von Fig. 3a;

Fig. 4    eine ausschnittsweise Schnittdarstellung des Gewindes;

Fig. 5    einen Konturverlauf des Traggewindes in Querschnittsansicht, und

Fig. 6    einen Konturverlauf des Gewindes einer Kalibriererhebung in Querschnittsansicht.

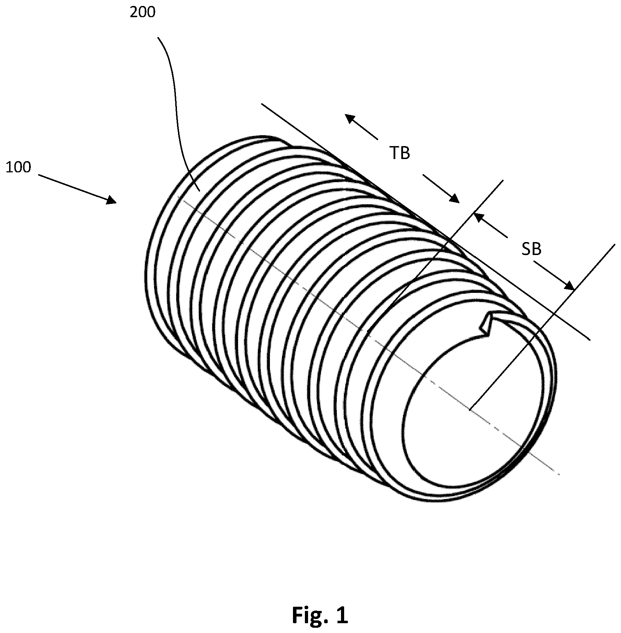

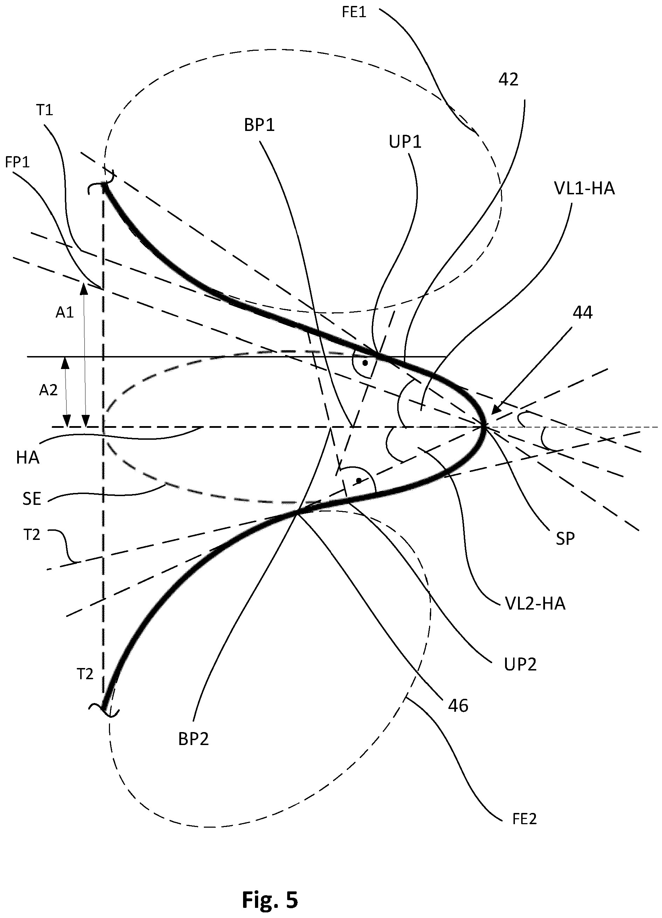

Fig. 1 zeigt eine perspektivische Ansicht eines vorderen Endes einer erfindungsgemäßen Schraube 100, die einen zylindrischen Tragbereich und einen konischen Spitzenbereich aufweist. Der Gewindeaußenradius $R_A$ nimmt ausgehend von dem Tragbereich TB des Gewindes 200 über den Spitzenbereich SB kontinuierlich ab, so dass sich eine konische Hüllkurve ergibt. Das Gewindeprofil des Gewindes 200 entspricht dem in der Fig. 5 beschriebenen Gewindeprofil. Durch die im Zusammenhang mit der Fig.5 beschriebenen Profilkontur wird durch die elliptische Gewindespitze, insbesondere über den Spitzenbereich, das Furchmoment beim Einschrauben in ein vorgebohrtes Loch oder Kernloch in einem Bauteil aus Leichtmetallwerkstoff, insbesondere aus Aluminium, reduziert.

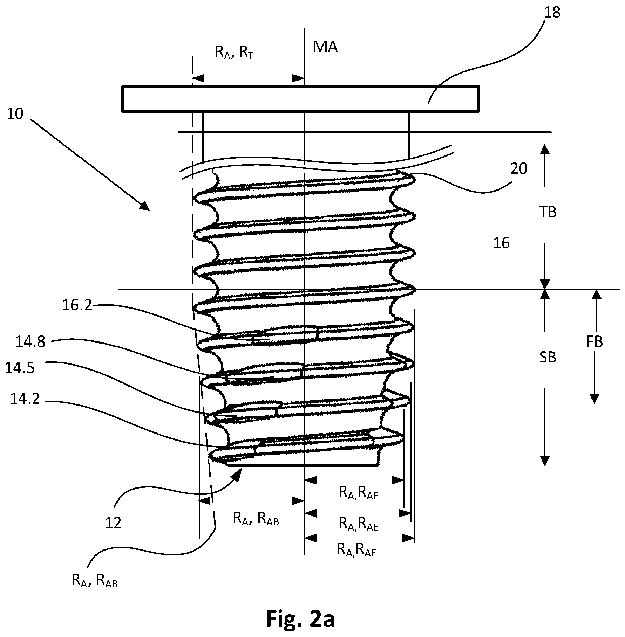

Fig. 2a zeigt eine Seitenansicht einer erfindungsgemäßen Schraube 10 zur Verschraubung in ein Bauteil aus einem Leichtmetallwerkstoff. Die Schraube 10 umfasst ein, als Schraubenspitze 12 bezeichnetes, vorderes Ende und einen am anderen Ende der Schraube 10 liegenden Kopf 18. Die Schraube besitzt ein Gewinde 20 mit einem Tragbereich TB, wobei im Tragbereich TB das Gewinde 20 einen konstanten Gewindeaußenradius $R_A$ über die Schraubenlinie besitzt, nämlich den Tragbereichsradius $R_T$, der dem halben Außendurchmesser im Tragbereich TB entspricht. Der Tragbereichsradius $R_T$ ergibt sich bevorzugt aufgrund des Nenn-Außendurchmessers der Schraube. So entspricht der Tragbereichsradius $R_T$ dem halben Nenn-Außendurchmesser. An den Tragbereich TB schließt sich in Richtung der Schraubenspitze 12, ein Spitzenbereich SB an, über den der Gewindeaußenradius $R_A$ des Gewindes 20 entlang der Schraubenlinie variiert und, im Ergebnis, bis zur Schraubenspitze 12 abnimmt. Im Spitzenbereich SB weist das Gewinde 20 in Umfangsrichtung abgegrenzte, sich in Radialrichtung erstreckende Erhebungen 14.2, 14.5, 14.8, 16.1, 16.2. (auch mit 14.X, 16.X bezeichnet) auf. Im Bereich dieser Erhebungen 14.X, 16.X verläuft das Gewinde 20 mit einem sich ändernden Gewindeaußenradius $R_A$. Ausgehend von der Schraubenspitze 12 nimmt der Gewindeaußenradius $R_A$ im Wesentlichen zu und bildet ein Gewinde 20, das im Wesentlichen ein Basisgewinde mit dem Basisgewindeaußenradius $R_{AB}$ aufweist, wobei der Basisgewindeaußenradius $R_{AB}$ linear ansteigt. Zudem weist das Gewinde Erhebungen 14.X, 16.X auf, deren Erhebungsaußenradius $R_{AE}$ gegenüber dem Basisgewindeaußenradius $R_{AB}$ vergrößert ist.

Von den bereichsweisen Erhebungen 14.X, 16.X im Spitzenbereich SB weisen wenigstens zwei Erhebungen 16.X einen Erhebungsmaximalradius $R_{E10max}$, $R_{E11max}$ auf, der für die beiden Erhebungen 16.1, 16.2 gleich groß ist und dem Kalibrierradius $R_K$ entspricht, der größer als der Tragbereichsradius $R_T$ ist. Diese Erhebungen werden als Kalibriererhebungen 16.X bezeichnet, da wenigstens die entlang der Schraubenlinie weiter in Richtung des Kopfes liegenden Kalibriererhebungen 16.X keine allzu großen Umformarbeiten zur Erzeugung des Muttergewindes mehr leisten müssen, sondern sicherstellen sollen, dass gegebenenfalls vorliegende Ungenauigkeiten des vorgeformten Gewindes, besonders im Bereich der Gewindespitze, reduziert werden. Insbesondere sollen solche Ungenauigkeiten reduziert werden, die durch Abnutzung der jeweils näher in Richtung der Schraubenspitze 12 liegenden Kalibriererhebung 16.X entstehen. Damit kann dann die Reibung des nachfolgend in die gefurchten Gewindegänge eingedrehten Gewindes 20 des Tragbereichs TB gering sein, so dass das Einschraubmoment gering und in engen Grenzen gehalten werden kann.

Zwischen den Kalibriererhebungen 16.X und der vordersten Spitze 12 sind zum Zwecke der Gewindeformung wenigstens drei Vorformerhebungen 14.X angeordnet, die in ihrem jeweiligen Erhebungsmaximalradius $R_{E1max}$,...,

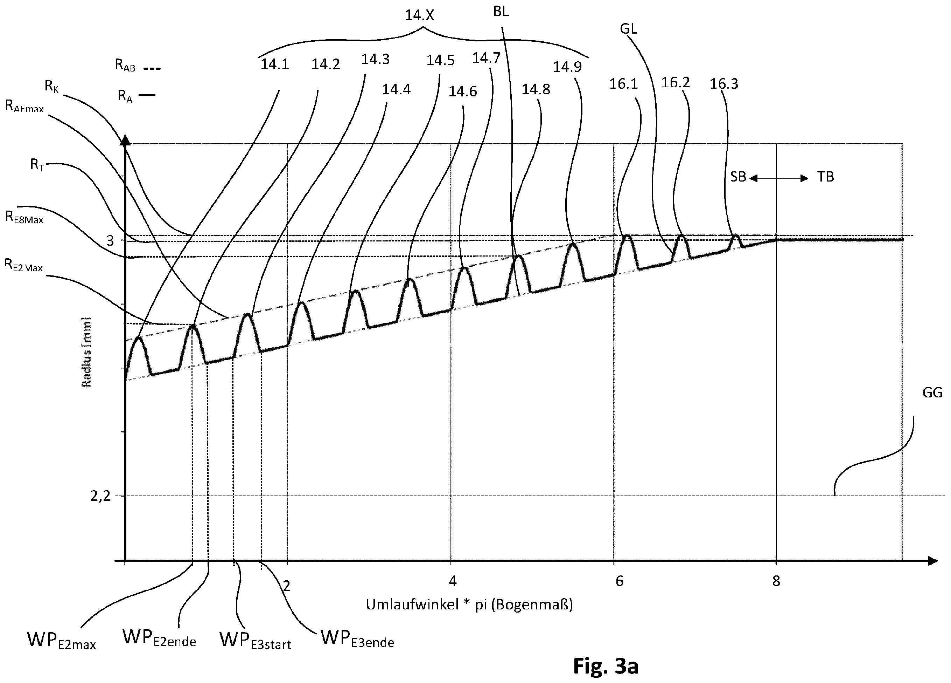

$R_{E9max}$, kleiner sind als der Kalibrierradius $R_K$. Im vorliegenden Ausführungsbeispiel sind 9 Vorformerhebungen 14.X vorgesehen. Durch die Zunahme der Erhebungsmaximalradien $R_{E1max}$ bis $R_{E9max}$, also des Gewindeaußenradius $R_A$ am lokalen Maximum der Erhebung 14.X, über den Spitzenbereich SB in Richtung des Tragbereichs TB wird das Muttergewinde mit zunehmender Tiefe in den Mutterwerkstoff geformt. Diese Zunahme des Erhebungsmaximalradius $R_{E1max}$ ist insbesondere in der Darstellung gemäß Fig. 3a, in der der Verlauf der Zunahme des jeweiligen Erhebungsmaximalradius $R_{E1max}$ bis $R_{E9max}$, der mit dem interpolierten Verlauf $R_{AEmax}$ bezeichnet ist, gut zu erkennen.

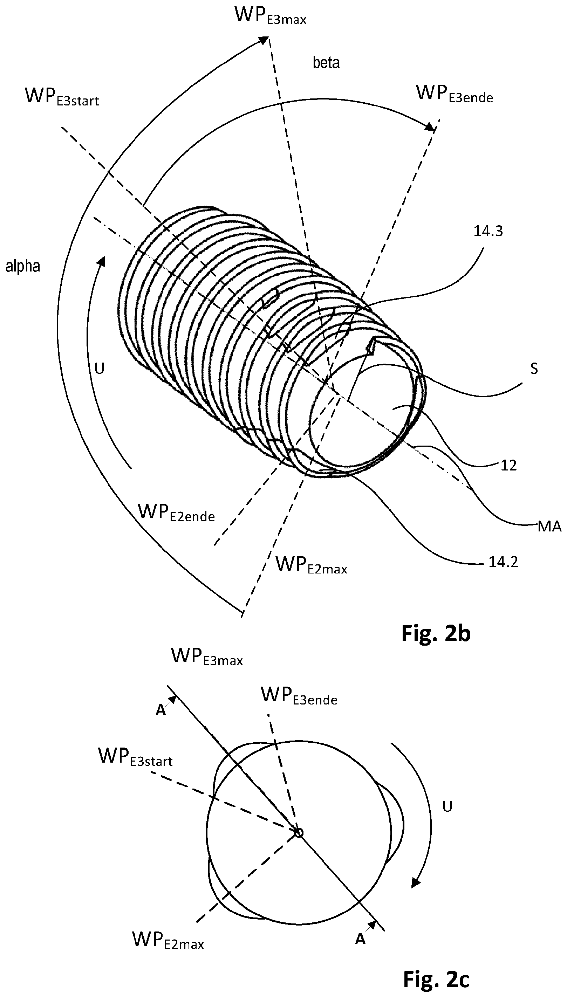

Fig. 2b zeigt eine perspektivische Ansicht auf die Schraubenspitze 12 der Schraube 10. Analog zur Ausführung gemäß Fig.1 beginnt das Gewinde 20 an der Schraubenspitze 12 und erstreckt sich in Richtung des Kopfes entlang seiner Schraubenlinie.

Beginnt man an einem Startpunkt S am Gewinde 20, beispielsweise am Beginn des Gewindes 20, schließt der Winkel des Gewinderadius an der Winkelposition $WP_{E2max}$, an der sich der Erhebungsmaximalradius der zweiten Vorformerhebung 14.2 befindet, in der Projektion auf die Normalen-Ebene zur Schraubenmittelachse MA einen Umlaufwinkel U mit dem Radius am Startpunkt ein. Der Umlaufwinkel U erhöht sich mit jeder vollen Umdrehung um 360°, wobei sich die Lage des Gewindeaußenradius an der jeweiligen Winkelposition mit zunehmendem Umlaufwinkel U entlang der Schraubenmittelachse in Richtung des Kopfes verschiebt. Die Draufsicht auf die Normalen-Ebene ist in Fig. 2c dargestellt.

Der Umlaufwinkelabstand alpha zwischen den Maxima zweier benachbarter Erhebungen, beispielsweise zwischen den Winkelpositionen $WP_{E2max}$ und $WP_{E3max}$ beträgt im vorliegenden Fall 120°, so dass sich, entgegen der Ausführung gemäß Fig. 2a, kein Versatz in Umfangsrichtung von den in Axialrichtung übereinanderliegenden Erhebungen zueinander ergibt. Alternativ kann der Umlaufwinkelabstand alpha zwischen den Maxima zweier benachbarter Erhebungen 14.X,16.X auch beispielsweise 125° betragen, so dass sich ein Versatz der Erhebungen in Umlaufrichtung ergibt.

Ferner erstreckt sich jede Erhebung über einen Umlaufwinkelabstand beta. Jede Erhebung 14.X, 16.X besitzt damit eine Winkelposition WP, an der die Erhebung 14.X, 16.X beginnt und eine weitere Winkelposition WP, an der die Erhebung endet. So beginnt beispielsweise die dritte Erhebung 14.3 an der Winkelposition $WP_{E3start}$ und erstreckt sich bis zum Ende der dritten Erhebung 14.3 an der Winkelposition $WP_{E3ende}$.

Bevorzugt ist der Umlaufwinkelabstand zweier benachbarter Erhebungen alpha mehr als doppelt so groß wie der Umlaufwinkelabstand beta der Erhebung.

Fig. 3a zeigt schematisch ein Beispiel des Verlaufs einer Gewindelinie GL am äußersten Punkt der Gewindespitze über die Schraubenlinie entlang ihrer Abwicklung über den Umlaufwinkel. Über den Spitzenbereich SB ist die prinzipielle Zunahme des Gewindeaußenradius $R_A$ in Richtung des Tragbereichs TB zu erkennen. Die prinzipielle Zunahme des Basisgewindeaußenradius ist als Basisgewindelinie BL als kurz gestrichelte Linie dargestellt. Diese zeigt den Verlauf eines "Basisgewindes" so, wie das Gewinde 20 ohne die bereichsweisen Erhebungen 14.X, 16.X verlaufen würde.

Die durchgezogene Linie zeigt den Verlauf der tatsächlichen Gewindelinie GL entlang des Basisgewindes und über die Erhebungen, die in ihrem Gewindeaußenradius über die Basisgewindelinie hinausgehen. Die Erhebungen besitzen beim Erhebungsmaximalradius $R_{AEmax}$ ihr lokales Maximum. Im vorliegenden Beispiel verläuft die Zunahme von $R_{AEmax}$ über den Spitzenbereich parallel zur Basisgewindelinie.

In dieser Darstellung ist zu erkennen, dass die Erhebungen in Umfangsrichtung kurz gestaltet sind und sich nur über einen kurzen Winkelbereich von bis zu etwa pi / 3 (60°) erstrecken. Der Umlaufwinkelabstand zwischen zwei Erhebungen, beispielsweise zwischen $WP_{E2ende}$ und $WP_{E3start}$, beträgt in etwa pi /3 (60°).

Das Gewinde weist drei Kalibriererhebungen 16.X im Spitzenbereich SB der Schraube 10 auf, nämlich in dem Bereich, in dem insbesondere der Gewindeaußenradius $R_A$ des Basisgewindes kontinuierlich, im vorliegenden Fall linear, zunimmt.

Die drei Kalibriererhebungen 16.X besitzen den gleichen Erhebungsmaximalradius $R_{E10max}$, $R_{E11max}$, $R_{E12max}$, der dem Kalibrierradius $R_K$ entspricht. Der Kalibrierradius $R_K$, und damit der jeweilige Erhebungsmaximalradius $R_{E10max}$, $R_{E11max}$, $R_{E12max}$, der Kalibriererhebungen 16.X ist größer als der Traggewinderadius $R_T$ des Gewindes im Tragbereich TB der Schraube.

Da sich die Kalibriererhebungen 16.X im Bereich der Radiuszunahme im Spitzenbereich SB befinden, ergibt sich im Vergleich zum Tragbereich TB eine größere Differenz zwischen dem Basisgewinderadius $R_{AB}$ und dem Kalibrierradius $R_K$. Dies ermöglicht, dass die Kalibriererhebungen 16.X auch in einem Walzverfahren zuverlässig ausreichend präzise hergestellt werden können. Dies führt dann zu einer zuverlässigeren Reduzierung des Furchmoments einer solchen Schraube bei der Direktverschraubung in Leichtmetall.

Die umfängliche Ausdehnung der Erhebung entspricht in etwa, oder ist bevorzugt kleiner als ein Umlaufwinkelabstand von 60°. Dadurch wird nur über einen geringen Schraubwinkel Reibung verursacht, wodurch das Einschraubmoment klein gehalten werden kann.

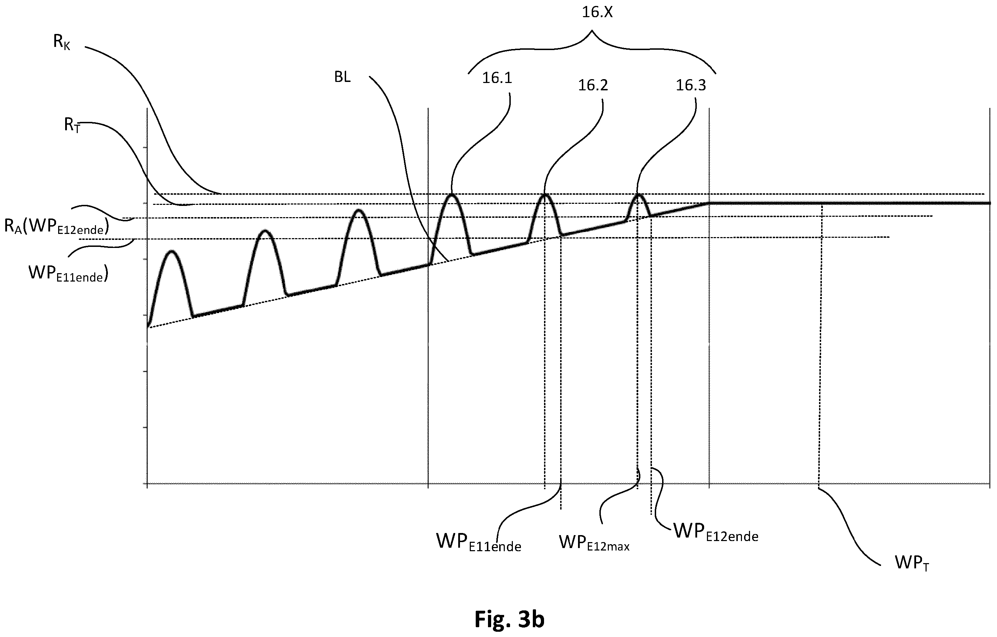

Fig. 3b zeigt eine ausschnittsweise Vergrößerung der Darstellung aus Fig. 3a mit Fokus auf die Kalibriererhebungen 16.X. In dieser vergrößerten Darstellung wird deutlich, dass der Unterschied im Gewindeaußenradius zum Basisgewinde BL selbst bei der dem Tragbereich TB nächstliegenden Erhebung noch deutlich größer ist als dies im Tragbereich TB der Fall wäre, wo der Unterschied lediglich $R_K$-$R_T$ betragen würde und der erfindungsgemäß bevorzugt kleiner als 0,1 mm ist.

Auf diese Weise können nach der erfindungsgemäßen Lehre die Kalibriererhebungen 16.X auch im Walzverfahren präziser hergestellt werden, um eine möglichst definierte Ausformung des Muttergewindes zu erreichen.

Zwischen der dem Tragbereich nächstgelegenen Kalibriererhebung 16.3 und dem Tragbereich weist der Gewindeaußenradius $R_A$ an der Umlaufwinkelposition $WP_{E12ende}$ ein lokales Minimum mit dem Gewindeaußenradius $R_A(WP_{E12ende})$ auf.

Das Verhältnis des Gewindeaußenradius $R_A(WP_{E12ende})$ an diesem lokalen Minimum zum Tragbereichsradius $R_T$ ist bevorzugt kleiner als 0,996.

Ferner ergibt sich am Ende der zweiten Kalibriererhebung 16.2, also an der Umlaufwinkelposition $WP_{E11ende}$ ein weiteres lokales Minimum mit dem Gewindeaußenradius $R_A(WP_{E11ende})$.

Das Gewinde ist insbesondere derart gestaltet, dass das Verhältnis des prozentualen Überstands des Kalibrierradius $R_K$ über einen Minimums-Mittelwert zum prozentualen Überstand des Kalibrierradius $R_K$ über den Tragbereichsradius $R_T$ größer als 1,4 ist.

Der Minimums-Mittelwert ist der Mittelwert des Gewindeaußenradius $R_A(WP_{E12ende})$ am ersten lokalen Minimum und des Gewindeaußenradius am zweiten lokalen Minimum $R_A(WP_{E11ende})$.

Die Gestaltung des Gewindes genügt also der Formel:

$$((R_K / ((R_A(WP_{E12ende}) + R_A(WP_{E11ende}))/2)) - 1) / ((R_K / R_T)-1) > 1,4$$

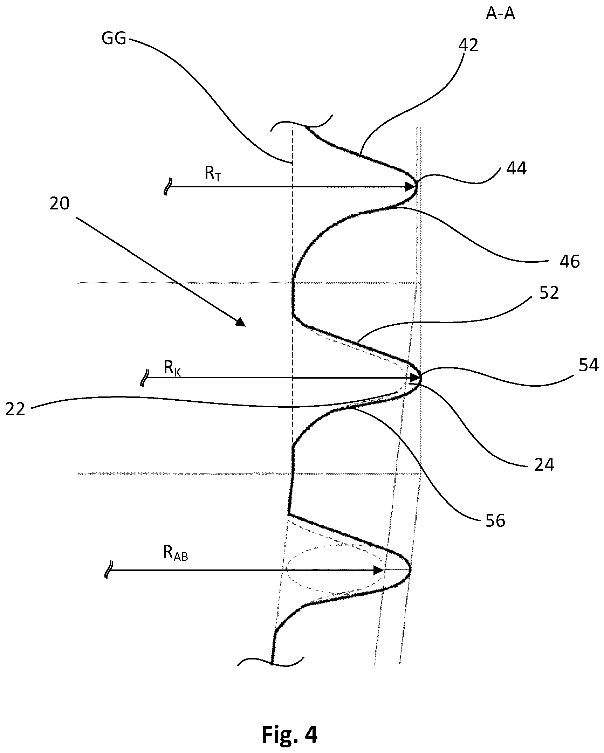

Die Ausdehnung der Erhebung in Axialrichtung ist in Fig. 4 dargestellt.

Fig. 4 zeigt eine schematische Schnittansicht A-A durch ein Gewinde 20 im Übergang von Tragbereich TB in den Spitzenbereich SB. Das Gewinde 20 weist ausgehend von seiner Gewindegrundlinie GG eine dem Kopf zugewandte Gewindeflanke im Bereich der Kalibriererhebung eine Lastflanke 52, auf, die in eine Gewindespitze 54 mit einer elliptischen Kontur übergeht. Im Anschluss in Richtung der Schraubenspitze geht die Gewindespitze 54 wieder in eine Gewindeflanke über, nämlich eine Führungsflanke 56. Die Kontur des Basisgewindes, wie es in der Schnittebene vorläge, wenn dort keine Erhebung wäre, ist mit einer Strichlinie dargestellt. Im Tragbereich TB entspricht dann der tatsächliche Verlauf dem des Basisgewindes, wobei dieses eine Lastflanke 42, eine Gewindespitze 44 und eine Führungsflanke 46 aufweist.

In Umfangsrichtung begrenzt überragt eine Kalibriererhebung 54 den Verlauf des Basisgewindes. Die Kalibriererhebung besitzt in ihrem lokalen Maximum den Erhebungsmaximalradius $R_{AEmax}$, der im vorliegenden Fall dem Kalibrierradius $R_K$ entspricht. In Fig. 4 ist ersichtlich, dass abweichend von dem in Form einer Strichlinie dargestellten Basisgewindeverlauf die Erhebung sich auch in Axialrichtung über das Basisgewinde hinaus erstreckt, wobei bevorzugt die Erhebung im Zuge eines Walzvorgangs mit gewalzt wird.

Wie auch Fig. 3b zu entnehmen ist, ergibt sich an der Winkelposition $WP11_{AEmax}$, also in dem Bereich, in dem die Basisgewindehöhe noch zunimmt, eine deutlich größere Differenz zwischen dem Basisgewinde und der Kalibrierhöhe $R_K$, als dies im Tragbereich TB gegenüber dem Tragbereichsradius $R_T$ der Fall wäre. So kann die Erhebung 54 zuverlässiger hergestellt werden.

Das Basisgewinde weist im Tragbereich eine elliptisch geformte Gewindespitze 44 auf. Die Gestaltung der Gewindespitze ist in Fig. 5 näher beschrieben.

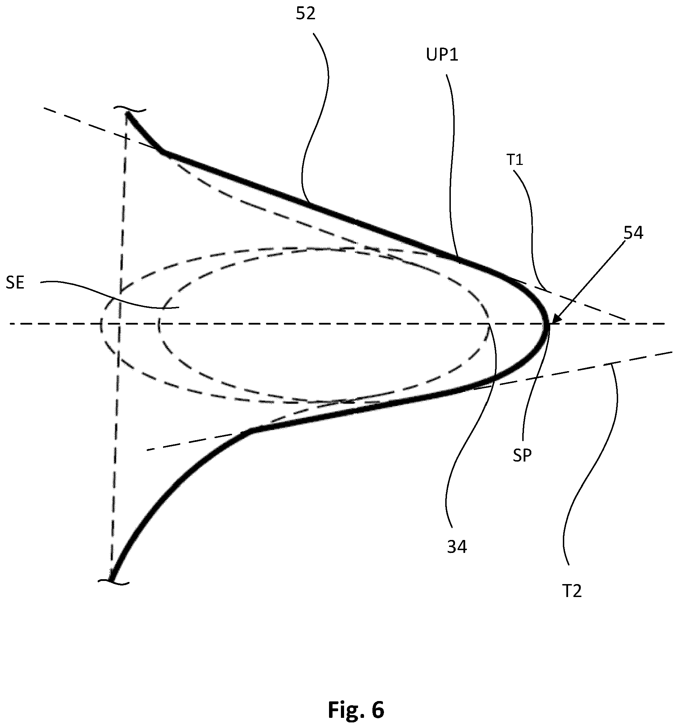

Die Gewindespitze 54 weist einen im Querschnitt elliptischen Verlauf auf, dessen Gestaltung und Wirkung im Rahmen von Fig. 6 näher beschrieben wird.

Durch die verbesserte Beständigkeit der elliptischen Gewindespitze gegen Abnutzung in Kombination mit der erfindungsgemäßen Gestaltung des Kalibrierbereichs im Spitzenbereich wird eine besonders zuverlässige präzise Ausformung des Muttergewindes ermöglicht.

Die elliptische Kontur der Gewindespitze im Tragbereich eignet sich besonders zur Anpassung an die Querschnittsform der Erhebung, wodurch die Anlagefläche im angezogenen Zustand vergrößert wird, wodurch wiederum die Auszugskräfte erhöht werden können. Die Form der Gewindespitze der Erhebung ist ähnlich zu der des Basisgewindes, wie sie nachfolgend im Hinblick auf Fig. 6 im Einzelnen beschrieben ist.

Fig. 5 zeigt das Gewindeprofil als einen Querschnitt des Gewindegangs im Tragebereich TB, wie es sowohl in einer Gestaltung einer Schraube gemäß Fig. 1, Fig. 2a oder Fig. 2b vorkommen kann. Das Gewindeprofil besitzt eine im Querschnitt elliptisch geformten Gewindespitze 44. Diese Gewindeform liegt im Wesentlichen auch im Basisgewinde über den Spitzenbereich SB der Schraube vor. In dem Fall, in welchem Erhebungen im Spitzenbereich vorgesehen sind, liegt die Gewindeform auch in dem Gewindebereich jeweils zwischen den Erhebungen.

Die Kontur der Gewindespitze 44 im Querschnitt folgt einer Ellipse SE. Die Gewindespitze 44 geht in Richtung der Schraubenspitze in eine Führungsflanke 46 und in Richtung des Schraubenkopfes in eine Lastflanke 42 über. Der Scheitelpunkt SP der Gewindespitze liegt am Scheitelpunkt der Ellipse SE in ihrem Schnittpunkt mit ihrer großen Halbachse HA.

Die Gewindespitze 44 geht an einem Übergangspunkt UP1 in die Lastflanke 42 und einem Übergangspunkt UP2 in die Führungsflanke 46 über. Die Übergangspunkte UP1 und UP2 sind die Punkte, an denen die Gewindekontur die die Gewindespitze 44 definierende Ellipsenbahn SE verlässt. An den Übergangspunkten UP1 und UP2 kann jeweils eine Tangente T1, T2 angelegt werden, die den Flankenwinkel definiert.

Am Übergangspunkt UP1 liegt die Tangente T1 an, die den Lastflankenwinkel LF mit der großen Halbachse HA einschließt.

Eine Orthogonale auf die Tangente T1 im Übergangspunkt UP1 schneidet die große Halbachse in einem Schnittpunkt BP1. Die Gewindespitze ist derart gestaltet, dass die Distanz zwischen dem Schnittpunkt BP1 und dem Übergangspunkt UP1 weniger als 90% des Abstands zwischen dem Scheitelpunkt SP und dem Schnittpunkt BP1 beträgt. Dadurch wird eine ausreichende Krümmung der Gewindespitze für einen guten Materialfluss während der Verdrängung erreicht, so dass die Abnutzung der Gewindespitze während des Furchvorgangs reduziert wird.

Ferner ist die Gewindespitze bevorzugt so geformt, dass die Verbindungslinie VL1 des Übergangspunktes UP1 mit dem Scheitelpunkt SP einen Scheitelpunktswinkel VL1 - HA mit der großen Halbachse HA einschließt. Dieser Scheitelpunktswinkel VL1-HA ist insbesondere kleiner als 45°, im vorliegenden Ausführungsbeispiel liegt dieser bei etwa 35°.

Die Gewindespitze 44 ist so gestaltet, dass die am UP1 geltenden Zusammenhänge auch am UP2 der Führungsflanke gelten.

Am Übergangspunkt UP2 liegt die Tangente T2 an, die einen Führungsflankenwinkel FF mit der großen Halbachse HA einschließt.

Eine Orthogonale auf die Tangente T2 im Übergangspunkt UP2 schneidet die große Halbachse in einem Schnittpunkt BP2. Die Gewindespitze ist derart gestaltet, dass die Distanz zwischen dem Schnittpunkt BP2 und dem Übergangspunkt UP2 weniger als 90% des Abstands zwischen dem Scheitelpunkt SP und dem Schnittpunkt BP2 beträgt. Dadurch wird eine ausreichende Krümmung der Gewindespitze für einen guten Materialfluss während der Verdrängung erreicht, so dass die Abnutzung der Gewindespitze während des Furchvorgangs reduziert wird.

Ferner ist die Gewindespitze bevorzugt so geformt, dass die Verbindungslinie VL2 des Übergangspunktes UP2 mit dem Scheitelpunkt SP einen Scheitelpunktswinkel VL2 - HA mit der großen Halbachse HA einschließt. Dieser Scheitelpunktswinkel VL2-HA ist insbesondere kleiner als 45°, im vorliegenden Ausführungsbeispiel liegt dieser bei etwa 25°.

Ferner kann ein Grundflankenwinkel bestimmt werden, der sich aus der Summe des Lastflankenwinkels LF und des Führungsflankenwinkels FF ergibt. Dieser ist im vorliegenden Ausführungsbeispiel 35°. Das Gewinde ist bevorzugt so gestaltet, dass eine Parallele zur Tangente T1 durch den Scheitelpunkt die Gewindegrundlinie in einem Fußpunkt FP1 schneidet. Der Abstand A1 des Fußpunkts FP1 zur großen Halbachse ist erfindungsgemäß höchstens dreimal so groß wie der Abstand A2 des Übergangspunkts UP1 zur großen Halbachse.

In der beschriebenen Ausführungsform ist das Gewinde so gestaltet, dass der Abstand A1 etwa doppelt so groß ist wie der Abstand A2 des Übergangspunkts zur großen Halbachse HA. Dadurch kann eine schlanke Gewindeform erreicht werden.

In der vorliegenden Ausführungsform wird der Flankenverlauf sowohl der Führungsflanke 46 als auch der Lastflanke 42, wenigstens teilweise durch Ellipsenkonturen bestimmt. Diese Flanken-Ellipsen FE1, FE2 weisen eine deutlich geringere Exzentrizität auf als die Gewindespitze bestimmende Ellipse SE.

Fig. 6 zeigt einen Gewindequerschnitt einer weiteren Gewindeform im Spitzenbereich SB der Schraube 10, wobei die Gewindespitze 54 des Furchbereichs im Bereich einer Erhebung dargestellt ist. Eine elliptische Gewindespitze 54 führt zu verbesserten Furcheigenschaften und reduziert damit die Abnutzung der so gestalteten Kalibriererhebungen. Ferner ist der Erhebungskontur der Gewindequerschnitt des Basisgewindes mit seiner Gewindespitze 34 gegenübergestellt, wie es an der Schnittlinie durch das Gewinde mit der Erhebung bei gleichmäßig zunehmendem Verlauf des Basisgewindes an dieser Stelle vorliegen würde.

Der Scheitelpunkt SP liegt hier den Erhebungsmaximalradius an der Erhebung entfernt von der Schraubenmittelachse.

Der Verlauf entlang der Spitzenellipse ist ähnlich dem Verlauf der Spitzenellipse gemäß Fig. 5.

Da das Gewinde im Tragbereich dieselbe Kontur wie das Basisgewinde aufweist, liegt die Tangente T1 an die die Gewindespitze definierende Ellipse im Übergangspunkt UP1 im Bereich der Erhebung parallel zur Tangente T1 an die Ellipse im Übergang zur Lastflanke im Tragbereich TB. Beide schließen damit denselben Lastflankenwinkel mit der großen Halbachse HA ein. Dasselbe gilt für die Tangente T2 in analoger Weise in Bezug auf die Führungsflanke.

Insoweit entspricht die Querschnittskontur der Erhebung im Wesentlichen der Kontur im Tragbereich. Lediglich der Bereich, in dem die Gewindeflanke den Tangenten T1, T2 folgt, ist bei der Erhebung länger. Dadurch wird ein gegenüber dem Tragbereich vergrößerter Gewindegang vorgefurcht, in den das Gewinde im Tragbereich mit parallel zum vorgefurchten Muttergewinde liegenden Flankenbereichen eingreifen kann.

So ist auch die dem Tragbereich nächstliegende Kalibriererhebung gestaltet, wobei der Unterschied zwischen dem Basisgewinde und der Erhebung jedoch größer als der Unterschied zwischen dem Gewinde im Tragbereich und der Erhebung ist. Dadurch ist eine zuverlässige Fertigung der Erhebungen gewährleistet, wobei dennoch ein nur geringfügig größer vorgeformtes Muttergewinde erzeugt wird.

**Patentansprüche**

1. Schraube (10) zur Direktverschraubung in ein Bauteil insbesondere aus einem Leichtmetallwerkstoff, umfassend einen Kopf und einen Schaft, wobei der Schaft mit einem Gewinde (20) versehen ist, dessen Gewindeaußenradius ($R_A$) sich, ausgehend von einem zylindrischen Tragbereich (TB) mit einem konstanten Tragbereichsradius ($R_T$), über einen Spitzenbereich (SB) zur Schraubenspitze (12) hin verringert, wobei das Gewinde (20) eine, der Schraubenspitze (12) zugewandte Führungsflanke (46, 56) und eine dem Schraubenkopf (18) zugewandte Lastflanke (42, 52) aufweist, wobei Führungsflanke (46, 56) und die Lastflanke (42, 52) über eine Gewindespitze (44, 54) verbunden sind, wobei die Profilkonturlinie der Gewindespitze (44, 54) von der Führungsflanke (46, 56) bis zur Lastflanke (42, 52) einer Ellipsenbahn entlang einer die Gewindespitze definierenden Ellipse (SE) folgt, wobei der Scheitelpunkt (SP) der großen Halbachse der Ellipse (SE) in der Gewindespitze liegt, und die Ellipse (SE) jeweils einen Übergangspunkt (UP1, UP2) zur Lastflanke (42, 52) und einen Übergangspunkt (UP1, UP2) zur Führungsflanke (46, 56) besitzt, wobei die Tangente (T1) an die Ellipse an ihrem Übergangspunkt (UP1, UP2) zur Lastflanke (42, 52) einen Lastflankenwinkel (LF) mit der großen Halbachse (HA) der Ellipse (SE) einschließt, und dass die Tangente (T2) an die Ellipse (SE) in dem Übergangspunkt (UP2) zur Führungsflanke (46, 56) einen Führungsflankenwinkel (FF) mit der großen Halbachse (HA) der Ellipse einschließt, und dass die Gewindespitze derart gestaltet ist, dass eine Orthogonale auf die jeweilige Tangente (T1, T2) im Übergangspunkt (UP1, UP2) die große Halbachse (HA) in einem Schnittpunkt (BP1; BP2) schneidet, **dadurch gekennzeichnet, dass** die Distanz zwischen dem jeweiligen Schnittpunkt (BP1; BP2) und dem Übergangspunkt (UP1, UP2) weniger als 90% des Abstands zwischen dem Scheitelpunkt (SP) und dem Schnittpunkt (BP1; BP2) beträgt.

2. Schraube nach Anspruch 1, **dadurch gekennzeichnet, dass** der Abstand des Übergangspunkts (UP1) zur Lastflanke (42, 52) von der großen Halbachse (HA) größer als 1/3 * Gewindehöhe * tan (Lastflankenwinkel) ist und der Abstand des Übergangspunkts (UP2) zur Führungsflanke (46, 56) von der großen Halbachse (HA) größer als 1/3 * Gewindehöhe * tan (Führungsflankenwinkel) ist.

3. Schraube nach Anspruch 1 oder 2, **dadurch gekennzeichnet, dass** die jeweilige Verbindungsline (VL1; VL2) von dem Übergangspunkt (UP1; UP2) mit dem Scheitelpunkt (SP) der großen Halbachse (HA) an der Gewindespitze einen Scheitelpunktswinkel (VL1-HA, VL2-HA) mit der großen Halbachse (HA) einschließt, der kleiner als 55°, insbesondere kleiner als 45°, ist.

4. Schraube nach einem der Ansprüche 1 bis 3, **dadurch gekennzeichnet, dass** der Lastflankenwinkel (LF) und der Führungsflankenwinkel (FF) jeweils höchstens 30° sind.

5. Schraube nach einem der Ansprüche 1 bis 4, **dadurch gekennzeichnet, dass** der Übergang von der elliptischen Gewindespitze (34, 44) in die Gewindeflanke (32, 36; 42, 46) tangential verläuft.

6. Schraube nach Anspruch 5, **dadurch gekennzeichnet, dass** die Führungsflanke (46, 56) und / oder die Lastflanke (42, 52) entlang einer Ellipsenbahn verläuft, die entgegen der die Gewindespitze (44, 54) bildenden Ellipse (SE) gekrümmt ist.

7. Schraube nach einem der vorangehenden Ansprüche, **dadurch gekennzeichnet, dass** die Führungsflanke (46, 56) und / oder die Lastflanke (42, 52) ab dem jeweiligen Übergangspunkt (UP1, UP2) entlang einer Ellipsenbahn verläuft, die entgegen der die Gewindespitze (44, 54) bildenden Ellipse (SE) gekrümmt ist.

8. Schraube nach einem der Ansprüche 6 oder 7, **dadurch gekennzeichnet, dass** die numerische Exzentrizität der Ellipsenbahn der Führungsflanke (46,56) und / oder der Lastflanke (42, 52) geringer ist als die numerische Exzentrizität der die Gewindespitze definierenden Ellipse.

9. Schraube nach einem der vorangehenden Ansprüche, **dadurch gekennzeichnet, dass** die große Halbachse (HA) der die Gewindespitze definierenden Ellipse (SE) gegenüber der Normalebene zur Schraubenmittelachse um einen Winkel von bis zu 10° in Richtung der Führungsflanke (46,56) geneigt ist.

**10.** Schraube nach einem der vorangehenden Ansprüche, **dadurch gekennzeichnet, dass** der Abstand benachbarter Gewindeflanken bei 90% der Gewindehöhe mehr als dem 0,7-fachen der Steigung beträgt und dort eine Flankenbreite aufweist, die weniger als das 0,5-fache der Gewindehöhe beträgt.

**11.** Schraube nach einem der vorangehenden Ansprüche, **dadurch gekennzeichnet, dass** das Gewinde (20) im Spitzenbereich (SB), wenigstens fünf, in Umfangsrichtung abgegrenzte, sich in Radialrichtung erstreckende Erhebungen (14.X,16.X) aufweist, wobei sich im Bereich der Erhebungen (14.X, 16.X) der Gewindeaußenradius ($R_A$) derart ändert, dass sich ein einer Erhebung zugeordneter ein Erhebungsmaximalradius ($R_{E1max}$; $R_{E2max}$, , $R_{E9max}$) ergibt, wobei der Erhebungsmaximalradius ($R_{E10max}$, $R_{E11max}$, $R_{E12max}$) von wenigstens zwei Erhebungen - Kalibriererhebungen (16.X) - gleich groß ist und einem Kalibrierradius ($R_K$) entspricht, der größer als der Tragbereichsradius ($R_T$) ist, wobei zwischen den Kalibriererhebungen (16.X) und der vordersten Schraubenspitze (12) wenigstens drei Vorformerhebungen (14.X) angeordnet sind, die in ihrem jeweiligen Erhebungsmaximalradius ($R_{AEmax}$) kleiner sind als der Erhebungsmaximalradius ($R_{AEmax}$) der Kalibriererhebungen (16.X) und zudem der Erhebungsmaximalradius ($R_{AEmax}$) der Vorformerhebungen (14.X) in Richtung der Schraubenspitze (12) abnimmt.

**12.** Schraube nach Anspruch 11, **dadurch gekennzeichnet, dass** zwischen dem Tragbereichsradius ($R_T$) und der ersten Erhebung in Richtung der Schraubenspitze (12) ein lokales Minimum im Gewindeaußenradius ($R_A$) liegt, das geringer als der Tragbereichsradius ($R_T$) ist.

**13.** Schraube nach Anspruch 12, **dadurch gekennzeichnet, dass** das Verhältnis von Gewindeaußenradius ($R_A$ ($WP_{E12ende}$)) am ersten lokalen Minimum zu Tragbereichsradius ($R_T$) kleiner als 0,996 ist.

**14.** Schraube nach Anspruch 12 oder 13, **dadurch gekennzeichnet, dass** das Gewinde derart gestaltet ist, dass ein Verhältnis des prozentualen Überstands des Kalibrierradius ($R_K$) zu einem Minimums-Mittelwert ((($R_A(WP_{E12ende})$ + $R_A(WP_{E11ende})$ )/2 ) zum prozentualen Überstand des Kalibrierradius ($R_K$) zum Tragbereichsradius ($R_T$) größer als 1,4 ist, wobei der Minimums-Mittelwert durch den Mittelwert des Gewindeaußenradius ($R_A(WP_{E12ende})$) am ersten lokalen Minimum zwischen Tragbereich und der ersten Kalibriererhebung (16.3) und des Gewindeaußenradius ($R_A$ ($WP_{E11ende}$)) am zweiten lokalen Minimum zwischen der ersten Kalibriererhebung (16.3) und der zweiten Erhebung (16.2) gebildet wird.

**15.** Schraube nach einem der Ansprüche 11 bis 14, **dadurch gekennzeichnet, dass** ausgehend von der Schraubenspitze eine Zunahme des Erhebungsmaximalradius ($R_{AEmax}$) degressiv erfolgt.

**Claims**

**1.** Screw (10) for direct screwing into a component, in particular of a light-metal material, comprising a head and a shank, which shank is provided with a thread (20), the outer thread radius ($R_A$) of which, starting from a cylindrical load-bearing region (TB) with a constant load-bearing region radius ($R_T$), decreases over a tip region (SB) towards the screw tip (12), which thread (20) has a guide flank (46, 56) facing the screw tip (12) and a load flank (42, 52) facing the screw head (18), with the guide flank (46, 56) and the load flank (42, 52) being connected via a thread crest (44, 54), with the profile contour line of the thread crest (44, 54) from the guide flank (46, 56) to the load flank (42, 52) following an elliptical path along an ellipse (SE) defining the thread crest, with the apex (SP) of the major semi-axis of the ellipse (SE) being in the thread crest, and the ellipse (SE) having a transition point (UP1, UP2) to the load flank (42, 52) and a transition point (UP1, UP2) to the guide flank (46, 56), with the tangent (T1) to the ellipse at its transition point (UP1, UP2) to the load flank (42, 52) forming a load flank angle (LF) with the major semi-axis (HA) of the ellipse (SE), and wherein the tangent (T2) to the ellipse (SE) at the transition point (UP2) to the guide flank (46, 56) forms a guide flank angle (FF) with the major semi-axis (HA) of the ellipse, and wherein the thread crest is designed in such a way that an orthogonal to the respective tangent (T1, T2) at the transition point (UP1, UP2) intersects the major semi-axis (HA) at an intersection point (BP1; BP2), **characterized in that** the distance between the respective intersection point (BP1; BP2) and the transition point (UP1, UP2) is less than 90% of the distance between the apex (SP) and the intersection point (BP1; BP2).

**2.** Screw according to claim 1, **characterized in that** the distance of the transition point (UP1) to the load flank (42, 52) from the semi-major axis (HA) is greater than 1/3 * thread height * tan (load flank angle), and the distance of the transition point (UP2) to the guide flank (46, 56) from the semi-major axis (HA) is greater than 1/3 * thread height * tan (guide flank angle).

3. Screw according to any one of claims 1 or 2 above, **characterized in that** the respective connecting line (VL1; VL2) from the transition point (UP1; UP2) with the apex (SP) of the semi-major axis (HA) at the thread crest forms an apex angle (VL1-HA, VL2-HA) with the semi-major axis (HA), which angle is less than 55°, in particular less than 45°.

4. Screw according to any one of claims 1 to 3 above, **characterized in that** the load flank angle (LF) and the guide flank angle (FF) each are at most 30°.

5. Screw according to any one of claims 1 to 4 above, **characterized in that** the transition from the elliptical thread crest (34, 44) to the thread flank (32, 36; 42, 46) is tangential.

6. Screw according to claim 5, **characterized in that** the guide flank (46, 56) and/or the load flank (42, 52) runs along an elliptical path which is curved in the opposite direction to the ellipse (SE) forming the thread crest (44, 54).

7. Screw according to any one of the preceding claims, **characterized in that** the guide flank (46, 56) and/or the load flank (42, 52) extends from the respective transition point (UP1, UP2) along an elliptical path which is curved in the opposite direction to the ellipse (SE) forming the thread crest (44, 54).

8. Screw according to any one of claims 6 or 7 above, **characterized in that** the numerical eccentricity of the elliptical path of the guide flank (46, 56) and/or the load flank (42, 52) is less than the numerical eccentricity of the ellipse defining the thread crest.

9. Screw according to any one of the preceding claims, **characterized in that** the semi-major axis (HA) of the ellipse defining the thread crest is inclined by an angle of up to 10° in the direction of the guide flank (46, 56) relative to the normal plane to the screw centerline.

10. Screw according to any one of the preceding claims, **characterized in that** the distance between adjacent thread flanks at 90% of the thread height is more than 0.7 times the pitch and has a flank width there which is less than 0.5 times the thread height.

11. Screw according to any one of the preceding claims, **characterized in that** the thread (20) has, in the tip region (SB), at least five elevations (14.X, 16.X) which are delimited in the circumferential direction and extend in the radial direction, with the thread outer radius ($R_A$) changing in the region of the elevations (14.X, 16.X) in such a way that an elevation maximum radius ($R_{E1max}$, $R_{E2max}$, ..., $R_{E9max}$) associated with an elevation results, with the elevation maximum radius ($R_{E10max}$, $R_{E11max}$, $R_{E12max}$) of at least two elevations - calibration elevations (16.X) - is of equal size and corresponds to a calibration radius ($R_K$) which is greater than the load-bearing region radius ($R_T$), with at least three preforming elevations (14.X) being arranged between the calibration elevations (16.X) and the foremost screw tip (12), with their respective elevation maximum radius ($R_{AEmax}$) being smaller than the elevation maximum radius ($R_{AEmax}$) of the calibration elevations (16.X) and, moreover, with the elevation maximum radius ($R_{AEmax}$) of the preforming elevations (14.X) decreasing in the direction of the screw tip (12).

12. Screw according to claim 11, **characterized in that** there is a local minimum in the thread outer radius ($R_A$) between the load-bearing region radius ($R_T$) and the first elevation in the direction of the screw tip (12), which minimum is smaller than the load-bearing region radius ($R_T$).

13. Screw according to claim 12, **characterized in that** the ratio of the thread outer radius ($R_A(WP_{E12end})$) at the first local minimum to the load-bearing region radius ($R_T$) is less than 0.996.

14. Screw according to any one of claims 12 or 13 above, **characterized in that** the thread is designed such that a ratio of the percentage protrusion of the calibration radius ($R_K$) to a minimum mean value ((($R_A(WP_{E12end})$ + $R_A(WP_{E11end})$)/2) to the percentage protrusion of the calibration radius ($R_K$) to the load-bearing region radius ($R_T$) is greater than 1.4, with the minimum mean value being defined by the mean value of the thread outer radius ($R_A(WP_{E12end})$) at the first local minimum between the load-bearing region and the first calibration elevation (16.3) and of the thread outer radius ($R_A(WP_{E11end})$) at the second local minimum between the first calibration elevation (16.3) and the second elevation (16.2).

15. Screw according to any one of the preceding claims 11 to 14 above, **characterized in that,** starting from the screw tip, the elevation maximum radius ($R_{AEmax}$) increases degressively.

**Revendications**

1. Vis (10) destinée à être directement vissée dans un composant en particulier fabriqué dans un matériau de métal léger, comprenant une tête et une tige, dans laquelle la tige est dotée d'un filetage (20) dont le rayon extérieur de filetage ($R_A$) se réduit en partant d'une région de support (TB) cylindrique avec un rayon de région de support ($R_T$) constant, via une région de pointe (SB) vers la pointe de vis (12), dans laquelle le filetage (20) présente un flanc de guidage (46, 56) tourné vers la pointe de vis (12) et un flanc de charge (42, 52) tourné vers la tête de vis (18), dans laquelle le flanc de guidage (46, 56) et le flanc de charge (42, 52) sont reliés via une pointe de filetage (44, 54), dans laquelle la ligne de contour de profil de la pointe de filetage (44, 54) suit, depuis le flanc de guidage (46, 56) jusqu'au flanc de charge (42, 52), une orbite elliptique le long d'une ellipse (SE) définissant la pointe de filetage, dans laquelle le point d'inflexion (SP) du grand demi-axe de l'ellipse (SE) se situe dans la pointe de filetage, et l'ellipse (SE) possède respectivement un point de transition (UP1, UP2) vers le flanc de charge (42, 52) et un point de transition (UP1, UP2) vers le flanc de guidage (46, 56), dans laquelle la tangente (T1) à l'ellipse comprend au niveau de son point de transition (UP1, UP2) vers le flanc de charge (42, 52) un angle de flanc de charge (LF) avec le grand demi-axe (HA) de l'ellipse (SE), et en ce que la tangente (T2) à l'ellipse (SE) comprend au niveau du point de transition (UP2) vers le flanc de guidage (46, 56) un angle de flanc de guidage (FF) avec le grand demi-axe (HA) de l'ellipse, et en ce que la pointe de filetage est conçue de sorte qu'une orthogonale sur la tangente (T1, T2) respective dans le point de transition (UP1, UP2) croise le grand demi-axe (HA) en un point d'intersection (BP1 ; BP2), **caractérisée en ce que** la distance entre le point d'intersection (BP1 ; BP2) respectif et le point de transition (UP1, UP2) représente moins de 90 % de l'espacement entre le point d'inflexion (SP) et le point d'intersection (BP1 ; BP2).

2. Vis selon la revendication 1, **caractérisée en ce que** l'espacement du point de transition (UP1) vers le flanc de charge (42, 52) par rapport au grand demi-axe (HA) est supérieur à 1/3 * hauteur de filetage * tan (angle de flanc de charge) et l'espacement du point de transition (UP2) vers le flanc de guidage (46, 56) par rapport au grand demi-axe (HA) est supérieur à 1/3 * hauteur de filetage * tan (angle de flanc de guidage).

3. Vis selon la revendication 1 ou 2, **caractérisée en ce que** la ligne de liaison (VL1 ; VL2) respective depuis le point de transition (UP1 ; UP2) avec le point d'inflexion (SP) du grand demi-axe (HA) comprend, au niveau de la pointe de filetage, un angle de point d'inflexion (VL1-HA, VL2-HA) avec le grand demi-axe (HA) qui est inférieur à 55°, en particulier inférieur à 45°.

4. Vis selon l'une des revendications 1 à 3, **caractérisée en ce que** l'angle de flanc de charge (LF) et l'angle de flanc de guidage (FF) sont respectivement d'au plus 30°.

5. Vis selon l'une des revendications 1 à 4, **caractérisée en ce que** la transition depuis la pointe de filetage elliptique (34, 44) jusque dans le flanc de filetage (32, 36 ; 42, 46) se déroule de façon tangentielle.

6. Vis selon la revendication 5, **caractérisée en ce que** le flanc de guidage (46, 56) et/ou le flanc de charge (42, 52) se déroule le long d'une orbite elliptique qui est courbée à l'opposé de l'ellipse (SE) formant la pointe de filetage (44, 54).

7. Vis selon l'une des revendications précédentes, **caractérisée en ce que** le flanc de guidage (46, 56) et/ou le flanc de charge (42, 52) se déroule à partir du point de transition (UP1, UP2) respectif le long d'une orbite elliptique qui est courbée à l'opposé de l'ellipse (SE) formant la pointe de filetage (44, 54).

8. Vis selon l'une des revendications 6 ou 7, **caractérisée en ce que** l'excentricité numérique de l'orbite elliptique du flanc de guidage (46, 56) et/ou du flanc de charge (42, 52) est inférieure à l'excentricité numérique de l'ellipse définissant la pointe de filetage.

9. Vis selon l'une des revendications précédentes, **caractérisée en ce que** le grand demi-axe (HA) de l'ellipse (SE) définissant la pointe de filetage est incliné par rapport au plan perpendiculaire à l'axe central de vis selon un angle allant jusqu'à 10° dans la direction du flanc de guidage (46, 56).

10. Vis selon l'une des revendications précédentes, **caractérisée en ce que** l'espacement entre des flancs de filetage avoisinants représente, à 90 % de la hauteur de filetage, plus de 0,7 fois la pente et y présente une largeur de flanc qui est inférieure à 0,5 fois la hauteur de filetage.

11. Vis selon l'une des revendications précédentes, **caractérisée en ce que** le filetage (20) présente dans la région de pointe (SB) au moins cinq élévations (14.X, 16.X) délimitées dans la direction périphérique et s'étendant dans la direction radiale, dans laquelle dans la région des élévations (14.X, 16.X) le rayon extérieur de filetage ($R_A$) se modifie de sorte qu'il en résulte un rayon maximal d'élévation ($R_{E1max}$ ; $R_{E2max}$ ; $R_{E9max}$) attribué à une élévation, dans laquelle le rayon maximal d'élévation ($R_{E10max}$ ; $R_{E11max}$ ; $R_{E12max}$) d'au moins deux élévations - des élévations d'étalonnage (16.X) - est de même taille et correspond à un rayon d'étalonnage ($R_K$) qui est supérieur au rayon de région de support ($R_T$), dans laquelle entre les élévations d'étalonnage (16.X) et la pointe de vis (12) la plus en avant sont agencées au moins trois élévations de préforme (14.X) qui dans leur rayon maximal d'élévation ($R_{AEmax}$) respectif sont inférieures au rayon maximal d'élévation ($R_{AEmax}$) des élévations d'étalonnage (16.X) et en outre le rayon maximal d'élévation ($R_{AEmax}$) des élévations de préforme (14.X) diminue dans la direction de la pointe de vis (12).

**12.** Vis selon la revendication 11, **caractérisée en ce qu'**entre le rayon de région de support ($R_T$) et la première élévation dans la direction de la pointe de vis (12) se situe un minimum local dans le rayon extérieur de filetage ($R_A$) qui est inférieur au rayon de région de support ($R_T$).

**13.** Vis selon la revendication 12, **caractérisée en ce que** le rapport du rayon extérieur de filetage ($R_A$)($WP_{E12ende}$)) au niveau du premier minimum local rapporté au rayon de région de support ($R_T$) est inférieur à 0,996.

**14.** Vis selon la revendication 12 ou 13, **caractérisée en ce que** le filetage est conçu de sorte qu'un rapport du dépassement en pourcentage du rayon d'étalonnage ($R_K$) par rapport à une valeur moyenne de minima ((($R_A$)($WP_{E12ende}$)$^+$($R_A$)($WP_{E11ende}$))/2) rapporté au dépassement en pourcentage du rayon d'étalonnage ($R_K$) par rapport au rayon de région de support ($R_T$) est supérieur à 1,4, dans laquelle la valeur moyenne de minima est formée par la valeur moyenne du rayon extérieur de filetage ($R_A$)($WP_{E12ende}$)) au niveau du premier minimum local entre la région de support et la première élévation d'étalonnage (16.3) et du rayon extérieur de filetage ($R_A$)($WP_{E11ende}$)) au niveau du second minimum local entre la première élévation d'étalonnage (16.3) et la seconde élévation d'étalonnage (16.2).

**15.** Vis selon l'une des revendications 11 à 14, **caractérisée en ce qu'**en partant de la pointe de vis une augmentation du rayon maximal d'élévation ($R_{AEmax}$) s'effectue de façon dégressive.

**Fig. 1**

**Fig. 2a**

WP$_{E3max}$

WP$_{E3start}$

beta

WP$_{E3ende}$

alpha

14.3

U

S

12

WP$_{E2ende}$

MA

WP$_{E2max}$

14.2

**Fig. 2b**

WP$_{E3max}$

WP$_{E3ende}$

A

WP$_{E3start}$

U

WP$_{E2max}$

A

**Fig. 2c**

Fig. 3a

**Fig. 3b**

**Fig. 4**

**Fig. 5**

**Fig. 6**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1053405 B1
- WO 9514863 A1
- KR 102383042 B1